# EUROPÄISCHE PATENTSCHRIFT

(11) **EP 2 033 846 B1**
(45) Veröffentlichungstag und Bekanntmachung des Hinweises auf die Patenterteilung: **19.10.2011**
(21) Anmeldenummer: 08013887.8
(22) Anmeldetag: 02.08.2008
(51) Int. Cl.: B60R 11/00

(54) **Laderaum für ein Fahrzeug**
Loading room for a vehicle
Espace de chargement pour véhicule

(30) Priorität: 08.09.2007 DE 102007042883
(43) Veröffentlichungstag der Anmeldung: 11.03.2009
(73) Patentinhaber: Volkswagen Aktiengesellschaft, 38436 Wolfsburg (DE)
(72) Erfinder: Wolter, Petra, 38527 Ohnhorst (DE); Jöhnk, Benno, 38550 Isenbüttel (DE)

(56) Entgegenhaltungen:
- EP-A1- 1 619 077
- EP-A1- 1 897 739
- WO-A1-2008/049494
- FR-A1- 2 890 908
- US-A1- 2001 030 069

## Beschreibung

Die Erfindung betrifft einen Laderaum für ein Fahrzeug gemäß dem Oberbegriff des Patentanspruchs 1.

In der Zwischenveröffentlichten EP 1 897 739 A1 ist ein Laderaum der vorgenannten Art offenbart. Der Laderaum weist ein Gehäuse für einen Speicher elektrischer Energie auf. Das Gehäuse ist hinter den Rücksitzen des Fahrzeugs angeordnet und erstreckt sich bis zur hinteren Laderaumkante. Auf der Oberseite des Gehäuses ist ein Bodenbelag angeordnet, der das Gehäuse in Fahrtrichtung nach vorne etwas überragt und an den hinteren Enden der in aufrechter Position befindlichen Rücksitze endet.

Aus der EP 1 619 077 A1 ist ein weiterer Laderaum bekannt. Der darin beschriebene Laderaum weist einen variablen Laderaumboden auf, der sich von der Hinterkante der Rücksitze bis zur hinteren Laderaumkante erstrecken kann. Der Laderaumboden ist ganz oder abschnittsweise höhenverstellbar und hochklappbar. Weiterhin weist der Laderaumboden einen mit den Rückenlehnen der Rücksitze verbundenen Teil auf, der zusammen mit den Rückenlehnen in eine im Wesentlichen horizontale Position verschwenkt werden kann.

Einen weiteren Laderaum offenbart die DE 103 49 454 insbesondere in den Figuren 4 bis 6. Für den elektrischen Antrieb des Fahrzeuges wird eine Batterieeinrichtung bereitgehalten, deren Dimensionierung so ausgelegt ist, dass der Laderaum für die Beladung mit weiteren Gegenständen praktisch kaum noch nutzbar ist.

Der Erfindung liegt die Aufgabe zu Grunde, für gattungsgemäße Laderäume ein Konzept bereitzustellen, dass auch bei Integration einer beispielsweise als Batterie ausgeführten Quelle elektrischer Energie eine Beladung des Laderaums mit weiteren Gegenständen bei guter Raumausnutzung und einem optisch ansprechenden Gesamteindruck ermöglicht. Diese Aufgabe wird gelöst mit einem Laderaum gemäß den Merkmalen des Patentanspruchs 1. Die Unteransprüche betreffen besonders zweckmäßige Weiterbildungen der Erfindung.

Gemäß Anspruch 1 ist vorgesehen, dass an der dem Fahrzeugsitz zugewandten Seite des Gehäuses zwischen diesem und dem Fahrzeugsitz ein Schleppdeckel angeordnet ist, durch den ein bei Umklappung einer Lehne des Fahrzeugsitzes entstehender Spalt zum Gehäuse abdeckbar ist.

Gemäß einer vorteilhaften Weiterbildung der Erfindung ist dem Gehäuse oder einem Karosserieabschnitt des Fahrzeugs im Bereich der Fußkante des Gehäuses eine zweite Auflagefläche vorgesehen, so dass für besonders großvolumiges und sperriges Ladegut das Laderaumvolumen nach unten hin vergrößert werden kann. Für die Gestaltung der Ladebodendeckel-Auflageflächen kann auf Konzepte zurückgegriffen werden, wie sie beispielsweise in den Schriften DE 102 61 393 A1 oder DE 102 61 392 beschrieben werden. Bevorzugt wird dabei der Laderaumkante des Fahrzeugs ein Verkleidungselement zugeordnet, dass zumindest zwei übereinander angeordnete Auflageflächen für den Ladeboden aufweist. Derartige Verkleidungselemente sind als Kunststoffspritzteile günstig herstellbar und erhalten durch die Einformung der Auflageflächen eine rippenartige Struktur, die in sich auch noch zu einer Versteifung des gesamten Verkleidungselementes führt.

Der Schleppdeckel kann an einer Lehne des Sitzes oder an dem Gehäuse befestigbar sein und gemäß einer weiteren vorteilhaften Ausgestaltung das Gehäuse mindestens zu 80 % bedecken, wenn die Lehne sich in einer für den Insassentransport geeigneten Gebrauchsposition befindet. Wenn die dem Laderaum inneren zugewandte Oberfläche des Schleppdeckels mit dem gleichen Oberflächenmaterial ausgeführt ist wie der Laderaumboden, kann durch die Abdeckung des größten Teils des Gehäuses in Verbindung mit dem Ladebodendeckel für ein gutes optisches Erscheinungsbild gesorgt werden. Zur Unterstützung der Funktionssicherheit können gemäß einem weiteren Merkmal der Erfindung beispielsweise den Seitenwänden Führungselemente zugeordnet sein, in denen der Schleppdeckel bewegbar ist, wenn dieser an einer Rückseite des Fahrzeugsitzes befestigt ist und die Lehne des Sitzes umgeklappt wird, weil beispielsweise der Laderaum nach vorne hin vergrößert werden soll.

Im Hinblick auf eine ausgezeichnete Crashsicherheit ist bei dem erfindungsgemäßen Laderaum noch von besonderer Bedeutung, dass das Gehäuse für die Batterie vor der Hinterachse endet und oberhalb eines Flüssigkeitstanks zur Kraftstoffversorgung eines verbrennungsmotorischen Antriebs angeordnet ist. Mit dieser Anordnung wird die Batterie insbesondere bei einem Heckcrash aus den sich dann einstellenden Lastpfaden herausgenommen und kann darüber hinaus auch dann nicht mit dem Flüssigkeitstank kollidieren, wenn sie für eine besonders raumsparende Anordnung diesen zumindest abschnittsweise in Fahrzeuglängsrichtung und Fahrzeugquerrichtung überlappt.

Dass erfindungsgemäße Konzept ist damit nicht nur im Hinblick auf eine gute Raumausnutzung günstig, sondern erfüllt auch weitere Anforderungen wie Variabilität im Laderaumvolumen, leichte Beladbarkeit durch den Fahrzeugnutzer und hohe Sicherheit beim Fahrzeugcrash. Hervorzuheben ist auch, dass das erfindungsgemäße Konzept auch auf Fahrzeuge anwendbar ist,
die bislang lediglich mit einem verbrennungsmotorischen Antrieb angeboten werden und nun als weitere Modellvariante mit einem Hybridantrieb ausgestattet werden sollen.

Ein vorteilhaftes Ausführungsbeispiel der Erfindung ist in der Zeichnung dargestellt.
Es zeigt
- Figur 1:: Im Bereich eines Laderaums einen Längsschnitt durch die Mitte eines Fahrzeugs,
- Figur 2:: In einer mit Figur 1 vergleichbaren Ansicht eine veränderte Anordnung von Bestand- teilen des erfindungsgemäßen Laderaums,
- Figur 3:: In einer perspektivischen Darstellung einen erfindungsgemäßen Laderaum mit ei- nem abgesenkten Ladebodendeckel,
- Figur 4:: In einer perspektivischen Ansicht einen an einer Rückenlehne befestigten Schlepp- deckel.
- Figur 5:: In einer perspektivischen Ansicht einen an einem Gehäuse befestigten Durchlade- boden.

Gleiche Bauteile oder Bauteilabschnitte weisen in allen Figuren die gleiche Bezifferung auf.

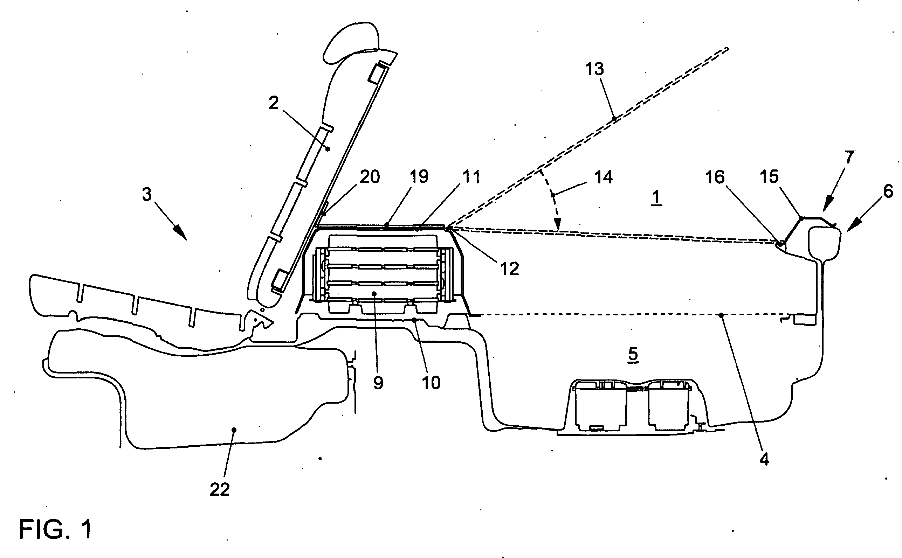

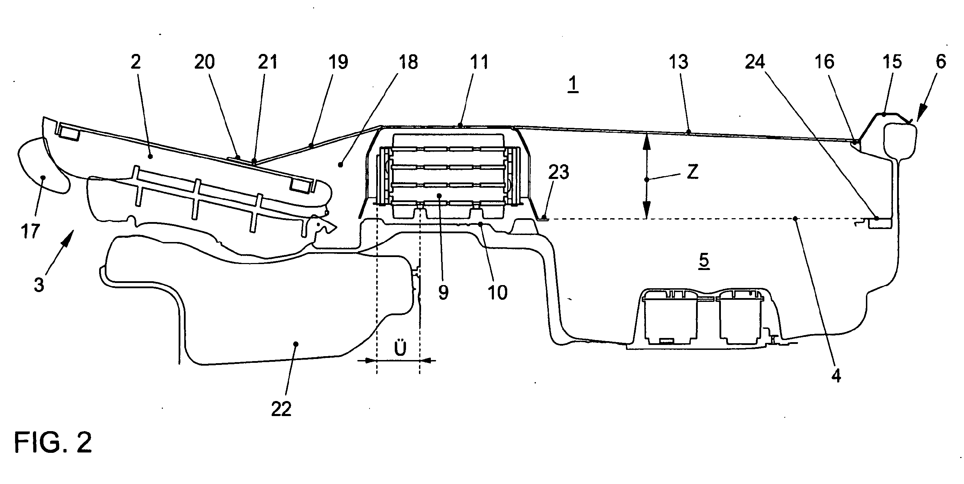

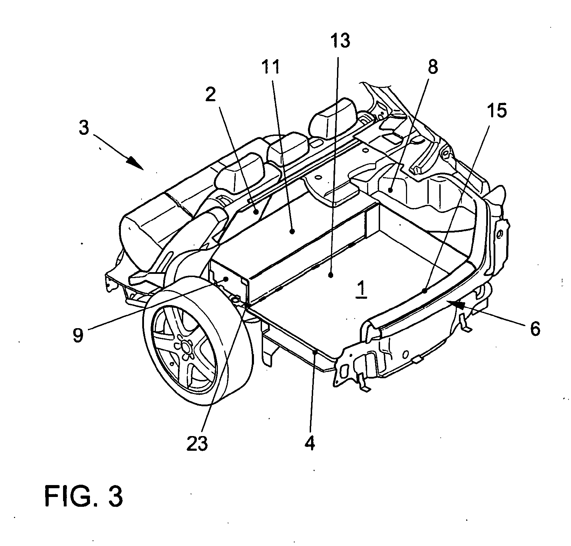

Man erkennt in Figur 1 einen insgesamt mit 1 bezeichneten Laderaum eines Fahrzeugs, dessen Begrenzung im Wesentlichen bestimmt wird durch eine Rückenlehne 2 einer insgesamt mit 3 bezeichneten Rücksitzbank, einen Basisladebodendeckel 4 über einer Reserveradmulde 5, einen Heckabschluss 6 mit einer Ladekante 7 sowie Seitenwänden 8 (siehe Figur 3, aus Übersichtlichkeitsgründen ist dort nur für die rechte Fahrzeugseite eine Seitenwandpartie dargestellt). Als Quelle für die Lieferung elektrischer Energie ist hier eine Batterie 9 vorgesehen, die an einem Karosseriebodenabschnitt 10 befestigt ist und von einem Gehäuse 11 abgedeckt wird. Dieses Gehäuse 11 weist im Bereich seiner Oberkante eine erste Auflagefläche 12 auf, die zur Auflage eines bewegbaren Ladebodendeckels 13 hergerichtet ist. Dieser kann aus der in Figur 1 dargestellten Offenstellung heraus gemäß Pfeil 14 in die mit Strichlinien angedeutete Absenkstellung bewegt werden. Zur Fixierung in dieser Absenkstellung ist an einem Ladekanten-Verkleidungselement 15 eine Auflagefläche 16 integral angeformt. Wenn der Ladebodendeckel 13 sich in der mit Strichlinien angedeuteten Position befindet, ergibt sich für den hinteren Teil des Laderaum 1 die in Figur 2 dargestellte Situation mit einem weitgehend ebenen Ladeboden, der sich vom Heckabschluss 6 bis in den Bereich einer Kopfstütze 17 der Rücksitzbank 3 erstreckt. Ein aus der Umklappung der Rückenlehne 2 entstehender Spalt 18 zwischen der Rücksitzbank 3 und dem Gehäuse 11 wird überbrückt mittels eines Schleppdeckels 19, der hier einen an der Rückenlehne 2 befestigten Halteabschnitt 20 aufweist und gegenüber diesem mittels einer Knickstelle 21 bewegbar ist.

Aus der Darstellung in Figur 2 wird auch deutlich, dass die von dem Gehäuse 11 abgedeckte Batterie 9 sich oberhalb eines Tanks 22 befindet und so bei einem Heckaufprall nicht mit dem Tank 22 kollidieren kann. Von herausgehobener Bedeutung ist auch ein mit Ü gekennzeichneter Überlappungsbereich in Fahrzeuglängsrichtung, weil auf diese Weise auch für kompakte Fahrzeuge mit einem Hybridantrieb einerseits ein zufriedenstellendes Ladevolumen im Laderaum 1 bereitstellbar ist und andererseits trotzdem bei Crashbelastungen ein Optimum an Sicherheit geboten werden kann. Im Hinblick auf eine gute Crashsicherheit ist darüber hinaus auch die Anordnung der Batterie 9 zwischen Reserveradmulde 5 und Rücksitzbank 3 bedeutsam, weil beispielsweise bei einliegendem Reserverad und Crashbelastung von der Heckseite her das Reserverad dann unter der Batterie 9 hinweg tauchen kann.

Figur 3 zeigt für den Laderaum 1 eine Situation, bei der der Ladebodendeckel 13 im Bereich einer Unterkante 23 des Gehäuses 11 auf dem Basisladebodendeckel 4 aufliegt. Zu diesem Zweck ist im Bereich der Fußkante des Gehäuses 11 an diesem selbst oder an dem Karosserieabschnitt 10 eine zweite Auflagefläche 23 und eine weitere Auflagekante 24 (siehe Figur 2) an dem Verkleidungselement 15 angeformt. Mit dieser Absenkung des Ladebodendeckels 13 kann sperriges und insbesondere quadratisches Ladegut auch dann untergebracht werden, wenn bei der in Figur 2 dargestellten Lage des Ladebodendeckels 13 der Abstand zum Fahrzeugdach um den Betrag Z zu klein ist. Es ist bekannt, dass für diesen zusätzlichen Gewinn an Laderaum Fahrzeugnutzer bereit sind, auf den Vorteil einer möglichst niedrigen Ladekante 15 in Bezug zur Ladefläche zu verzichten. Damit bietet das erfindungsgemäße Konzept für einen Fahrzeugladeraum mit integrierter Batterie 9 im Hinblick auf Nutzen und Komfort ein Optimum an Variabilität.

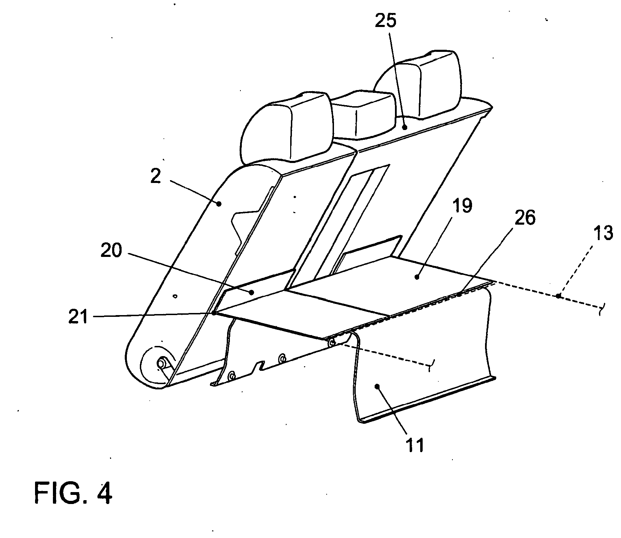

Hervorzuheben ist auch das mit dem erfindungsgemäßen Konzept der Laderaum optisch ansprechend realisiert werden kann. So zeigt Figur 4 beispielsweise für eine Rücksitzbank mit einer so genannten 40/60-Teilung 25 einen Schleppdeckel 19, der die vorgenannte Teilung ebenfalls aufweist und das Gehäuse 11 bei der in Normalstellung befindlichen Rückenlehne 2 mindestens zu 80% abdeckt. Wenn der mit Strichlinien angedeutete Ladebodendeckel 13 dann mit dem Schleppdeckel 19 eine gemeinsame Stoßfuge 26 bildet und die gleiche Oberflächenbeschaffenheit wie diese aufweist, erhält man optisch ein sehr gutes Erscheinungsbild. Auch im Hinblick auf die Übergänge zu den Seitenwänden 8 kann mit dem erfindungsgemäßen Konzept dafür gesorgt werden, dass keine Toträume zwischen dem Gehäuse 11 und den Seitenwänden 8 entstehen. Die Erstreckung des Gehäuses 11 zwischen den Seitenwänden 8 ist so gewählt, dass entweder zwischen dem Gehäuse 11 und den Seitenwänden 8 selbst keine Toträume entstehen oder aber das Gehäuse 11 mit Verkleidungselementen verdeckt ist, die lückenlos an Verkleidungselemente der Seitenwände 8 angeschlossen werden können oder zumindest Abschnittsweise integral mit diesen verbunden sind.

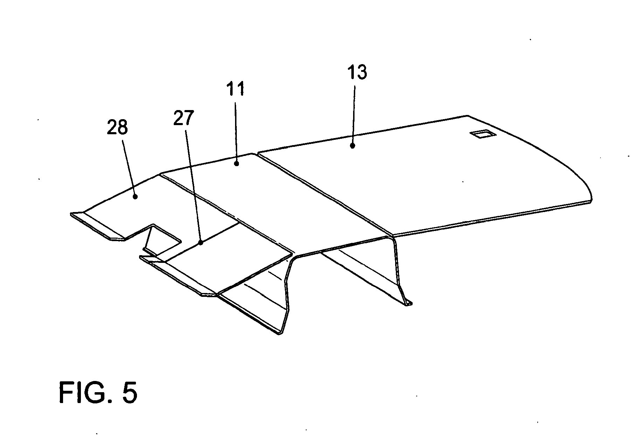

Figur 5 zeigt mit einer korrespondierenden 40/60-Teilung 27 einen Durchladeboden 28, der ergänzend oder alternativ zum Schleppdeckel 19 angeordnet ist. Dadurch können einzelne Teile der Rückenlehne 2 auch separat umgelegt werden.

Der Einsatz der erfindungsgemäßen Lösung ist nicht auf das in der Zeichnung dargestellte Ausführungsbeispiel beschränkt. Anwendbar sind die dort gezeigten Prinzipien auch auf Ultra-Kompaktfahrzeuge mit nur einer Sitzreihe ebenso wie auf Großraumlimousinen oder Kleinbussen mit mehr als zwei Sitzreihen.

## Patentansprüche

1. Laderaum (1) für ein Fahrzeug,
- der im Wesentlichen begrenzt ist durch wenigstens einem Fahrzeugsitz (3), in Fahrzeuglängsrichtung verlaufende Seitenwände (8), einen Heckabschluss (6) und einen Laderaumboden,
- in dem quer zur Fahrtrichtung hinter dem Fahrzeugsitz (3) ein Gehäuse (11), in dem sich eine als Speicher oder als Erzeuger ausgeführte Quelle (9) elektrischer Energie befindet, angeordnet ist,
- wobei das Gehäuse (11) sich zwischen den Seitenwänden (8) erstreckt und im Bereich einer Oberkante eine Auflagefläche (12) für einen Ladebodendeckel (13) bildet, der sich zumindest von dem Gehäuse (11) bis zu einer dem Heckabschluss (6) zugeordneten Laderaumkante (15) erstreckt,
wobei an der dem Fahrzeugsitz (3) zugewandten Seite des Gehäuses (11) zwischen diesem und dem Fahrzeugsitz (3) ein Schleppdeckel (19) angeordnet ist, durch den ein bei Umklappung einer Lehne (2) des Fahrzeugsitzes (3) entstehender Spalt (18) zum Gehäuse (11) abdeckbar ist.

2. Laderaum nach Anspruch 1, **dadurch gekennzeichnet, dass** das Gehäuse (11) oder ein Karosserieabschnitt (10) des Fahrzeugs im Bereich einer Fußkante des Gehäuses (11) eine zweite Auflagefläche (23) für den Ladebodendeckel (13) bildet.

3. Laderaum nach Anspruch 1 oder 2, **dadurch gekennzeichnet, dass** der Laderaumkante (7) des Fahrzeugs ein Verkleidungselement (15) zugeordnet ist, dass mindestens zwei übereinander angeordnete Auflagekanten (16, 24) aufweist.

4. Laderaum nach wenigstens einem der Ansprüche 1 bis 3, **dadurch gekennzeichnet, dass** der Schleppdeckel (19) am Fahrzeugsitz (3) oder an dem Gehäuse (11) befestigt ist.

5. Laderaum nach wenigstens einem der Ansprüche 1 bis 4, **dadurch gekennzeichnet, dass** der Schleppdeckel (19) das Gehäuse (11) mindestens zu 80% bedeckt, wenn die Lehne (2) des Fahrzeugsitzes (3) sich in einer für den Insassentransport vorgesehenen Gebrauchsposition befindet.

6. Laderaum nach wenigstens einem der Ansprüche 1 bis 5, **dadurch gekennzeichnet, dass** an dem Gehäuse (11) und/oder den Seitenwänden (8) Führungselemente vorgesehen sind, innerhalb derer der Schleppdeckel (19) bewegbar ist.

7. Laderaum nach wenigstens einem der Ansprüche 1 bis 6, **dadurch gekennzeichnet, dass** das Gehäuse (11) zumindest abschnittsweise oberhalb eines Flüssigkeitstanks (22) angeordnet ist, der zur Kraftstoffversorgung eines verbrennungsmotorischen Antriebes vorgesehen ist.

8. Laderaum nach Anspruch 1, **dadurch gekennzeichnet, dass** das Gehäuse (11) und der Flüssigkeitstank (22) zumindest teilweise einander in Fahrzeuglängs- und -querrichtung überlappend angeordnet sind.

## Claims

1. Loading room (1) for a vehicle,
- which is substantially delimited by at least one vehicle seat (3), side walls (8) running in the longitudinal direction of the vehicle, a rear closure (6) and a loading room floor
- in which a housing (11) containing an electric energy source (9) designed as a storage or as a producer is arranged transversely with respect to the direction of travel behind the vehicle seat (3),
- wherein the housing (11) extends between the side walls (8) and, in the region of an upper edge, forms a supporting surface (12) for a loading floor cover (13) which extends at least from the housing (11) as far as a loading room edge (15) assigned to the rear closure (6),
wherein a drag cover (19) is arranged between the housing (11) and the vehicle seat (3) on that side of said housing which faces the vehicle seat (3), by means of which drag cover a gap (18) which arises with respect to the housing (11) when a backrest (2) of the vehicle seat (3) is folded over can be covered.

2. Loading room according to Claim 1, **characterized in that** the housing (11) or a body section (10) of the vehicle forms a second supporting surface (23) for the loading floor cover (13) in the region of a bottom edge of the housing (11).

3. Loading room according to Claim 1 or 2, **characterized in that** the loading room edge (7) of the vehicle is assigned a trim element (15) which has at least two supporting edges (16, 24) arranged one above the other.

4. Loading room according to at least one of Claims 1 to 3, **characterized in that** the drag cover (19) is fastened to the vehicle seat (3) or to the housing (11).

5. Loading room according to at least one of Claims 1 to 4, **characterized in that** the drag cover (19) covers at least up to 80% of the housing (11) when the backrest (2) of the vehicle seat (3) is in a use position provided for occupant transport.

6. Loading room according to at least one of Claims 1 to 5, **characterized in that** guide elements within which the drag cover (19) is movable are provided on the housing (11) and/or on the side walls (8).

7. Loading room according to at least one of Claims 1 to 6, **characterized in that** at least part of the housing (11) is arranged above a liquid tank (22) which is provided for supplying fuel to an internal combustion engine drive.

8. Loading room according to Claim 1, **characterized in that** the housing (11) and the liquid tank (22) are at least partially arranged overlapping each other in the longitudinal and transverse direction of the vehicle.

## Revendications

1. Espace de chargement (1) pour un véhicule,
- qui est essentiellement limité par au moins un siège de véhicule (3), des parois latérales (8) s'étendant dans la direction longitudinale du véhicule, une fermeture arrière (6) et un sol d'espace de chargement,
- dans lequel est disposé, transversalement à la direction de conduite derrière le siège du véhicule (3), un boîtier (11) dans lequel se trouve une source (9) d'énergie électrique réalisée sous forme d'accumulateur ou de générateur,
- le boîtier, (11) s'étendant entre les parois latérales (8) et formant dans la région d'une arête supérieure une face d'appui (12) pour un couvercle de sol de chargement (13), qui s'étend au moins depuis le boîtier (11) jusqu'à une arête d'espace de chargement (15) associée à la fermeture arrière (6),
un couvercle entraîné (19) étant disposé sur le côté du boîtier (11) tourné vers le siège du véhicule (3) entre le boîtier (11) et le siège du véhicule (3), et permettant de recouvrir un interstice (18) par rapport au boîtier (11) produit lors du rabattement d'un dossier (2) du siège du véhicule (3).

2. Espace de chargement selon la revendication 1, **caractérisé en ce que** le boîtier (11) ou une portion de la carrosserie (10) du véhicule forme, dans la région d'une arête de base du boîtier (11), une deuxième surface d'appui (23) pour le couvercle du sol de chargement (13).

3. Espace de chargement selon la revendication 1 ou 2, **caractérisé en ce que** l'arête de l'espace de chargement (7) du véhicule est associée à un élément d'habillage (15), qui présente au moins deux arêtes d'appui (16, 24) disposées l'une au-dessus de l'autre.

4. Espace de chargement selon au moins l'une quelconque des revendications 1 à 3, **caractérisé en ce que** le couvercle entraîné (19) est fixé sur le siège du véhicule (3) ou sur le boîtier (11).

5. Espace de chargement selon au moins l'une quelconque des revendications 1 à 4, **caractérisé en ce que** le couvercle entraîné (19) recouvre le boîtier (11) au moins à 80%, lorsque le dossier (2) du siège du véhicule (3) se trouve dans une position d'utilisation prévue pour le transport de passagers.

6. Espace de chargement selon au moins l'une quelconque des revendications 1 à 5, **caractérisé en ce que** des éléments de guidage sont prévus sur le boîtier (11) et/ou sur les parois latérales (8), à l'intérieur desquels le couvercle entraîné (19) peut être déplacé.

7. Espace de chargement selon au moins l'une quelconque des revendications 1 à 6, **caractérisé en ce que** le boîtier (11) est disposé au moins en partie au-dessus d'un réservoir de liquide (22) qui est prévu pour l'alimentation en carburant d'un entraînement par moteur à combustion interne.

8. Espace de chargement selon la revendication 1, **caractérisé en ce que** le boîtier (11) et le réservoir de liquide (22) sont disposés au moins en partie en se chevauchant l'un et l'autre dans la direction longitudinale et transversale du véhicule.
